# EUROPÄISCHE PATENTSCHRIFT

(11) **EP 2 220 757 B1**
(45) Veröffentlichungstag und Bekanntmachung des Hinweises auf die Patenterteilung: **21.12.2011**
(21) Anmeldenummer: 08863763.2
(22) Anmeldetag: 20.10.2008
(51) Int. Cl.: H02P 3/06, H02P 3/08

(54) **ANORDNUNG ZUR ANSTEUERUNG EINER GLEICHSTROMMASCHINE**
ARRANEGEMENT FOR CONTROLLING A DC MACHINE
DISPOSITIF POUR COMMANDER UNE MACHINE À COURANT CONTINU

(30) Priorität: 20.12.2007 AT 20732007
(43) Veröffentlichungstag der Anmeldung: 25.08.2010
(73) Patentinhaber: SIEMENS AKTIENGESELLSCHAFT, 80333 München (DE)
(72) Erfinder: FUCHS, Werner, A-4890 Weissenkirchen im Attergau (AT); GRIESSNIG, Gerhard, A-8052 Graz (AT); HACKL, Franz, A-1130 Wien (AT); HOFMÜLLER, Wilfried, A-2000 Stockerau (AT); HÖRIST, Gerald, A-1220 Wien (AT); MOSSBURGER, Fritz, A-7000 Eisenstadt (AT); SCHMID, Roland, A-1030 Wien (AT); SCHWARZMANN, Harald, A-1160 Wien (AT); WAHRBICHLER, Joachim, A-8043 Graz (AT)
(74) Vertreter: Maier, Daniel Oliver
(86) Internationale Anmeldenummer: PCT/EP2008/064104
(87) Internationale Veröffentlichungsnummer: WO 2009/080384

(56) Entgegenhaltungen:
- ALLLEN-BRADLEY: "Guidelines for Use of Kinetix 2000 Drives in Category 3 Safe Torque Off Applications per EN954-1" APPLICATION NOTES OF ROCKWELL AUTOMATION, April 2007 (2007-04), Seiten 1-8, XP002512329
- ABB: "Applikationsanleitung für die Funktion Sicher abgeschaltetes Moment Safe Torque Off (STO-Funktion)" ABB HANDBOOKS, Oktober 2007 (2007-10), Seiten 1-18, XP002512330
- WRATIL, P.: "Technology of safe Drives" IEEE, Bd. 1, Juni 2007 (2007-06), Seiten 155-161, XP002512331

## Beschreibung

Die Erfindung betrifft eine Anordnung zur Ansteuerung einer Gleichstrommaschine mittels einer Standardsteuerung und einer Sicherheitsanordnung, wobei die Gleichstrommaschine mittels eines mit einer Steuerspannung betätigten Hauptschalters an eine Versorgungsspannung anschließbar ist und wobei zur Steuerung der Drehzahl und/oder des Drehmoments der Gleichstrommaschine aus einer Zündimpuls-Versorgungsspannung Zündimpulse zur Ansteuerung der in einem Gleichstromrichter angeordneten elektronischen Schalter abgeleitet sind. Des Weiteren betrifft die Erfindung Verfahren zur Ansteuerung der Anordnung.

Bei der Ansteuerung von Gleichstrommaschinen gewinnen sicherheitsrelevante Funktionen zunehmend an Bedeutung. Der Grund hierfür sind strenger werdende gesetzliche Auflagen und zunehmende Haftungen der Maschinenbetreiber. Eine wichtige Funktion ist in der Regel eine sichere Abschaltung oder Drehmomentfreischaltung der Maschine gefordert. Einschlägige Normen wie die IEC 61800 beschreiben bestimmte sicherheitsrelevante Funktionen, wie beispielsweise die sichere Drehmomentfreischaltung STO (Safe Torque Off) oder die sichere Abschaltung SS1 (Safe Stop 1).

Bei der STO-Funktion wird gefordert, dass ein Motor von allen Versorgungsquellen getrennt wird, welche ein Drehmoment hervorrufen könnten.

Die SS1-Funktion ist als sichere Abschaltung definiert, wobei zunächst eine kontrollierte Verzögerung bzw. Stillsetzung der Maschine erfolgt, wobei nach einer festgelegten Zeitspanne die STO-Funktion initiiert wird.

Die Application Note "Guidelines for Use of Kinetix 2000 Drives in Category Safe Torque Off Applications per EN954-1" von Rockwell Automation, April 2007, beschreibt eine Sicherheitsschaltung für mehrphasige Antriebe nach EN-954-1, die eine Safe Torque Off Funktion durchführt. Das Sicherheitsmodul verfügt über eine flexible Software zur Programmierung eines zeitabhängigen Stopp-Profils und über eine Schnittstellte zur Kommunikation mit einem Stromrichter. Das Sicherheitsmodul ist in der Lage, Schütze zu aktivieren und eine Widerstandsbremsung zu steuern.

Derartige genormte sicherheitsrelevante Funktionen sind derzeit nur in Steuerungen für Drehstrommaschinen umgesetzt. Für die Durchführung genormter sicherheitsrelevanter Funktionen bei Gleichstrommaschinen bedarf es nach dem Stand der Technik zusätzlicher externer zertifizierter Kompcnenten (Sicherheitsschaltgeräte).

Beispielsweise beschreibt die Application Note "Guidelines for Use of Kinetix 2000 Drives in Category Safe Torque Off Applications per EN954-1" von Rockwell Automation, April 2007, eine Sicherheitsschaltung für mehrphasige Antriebe nach EN-954-1, die eine Safe Torque Off-Funktion durchführen. Das Sicherheitsmodul verfügt über eine flexible Software zur Programmierung eines zeitabhängigen Stopp-Profils und über eine Schnittstelle zur Kommunikation mit einem Stromrichter. Das Sicherheitsmodul ist in der Lage, Schütze zu aktivieren und eine Widerstandsbremsung zu steuern.

Der Erfindung liegt deshalb die Aufgabe zugrunde, eine Anordnung und ein Verfahren und eine Sicherheitsanordnung anzugeben, mittels welcher genormte sicherheitsrelevante Funktionen auch für Gleichstrommaschinen auf einfache Weise zur Verfügung gestellt werden können.

Erfindungsgemäß wird diese Aufgabe gelöst durch eine Anordnung nach Anspruch 1, wobei die Sicherheitsanordnung ein Sicherheitsmodul umfasst, welches als modulare Erweiterung in die Standardsteuerung einsteckbar ist, wobei die Sicherheitsanordnung zur Initiierung einer Safe Torque off-Funktion eingereichtet ist und der Standardsteuerung bei Initiierung der Safe Torque Off-Funktion eine Drehmomentfreischaltung vorgibt, wobei das Sicherheitsmodul (SM) ausgangsseitig zwei unabhängige Abschaltpfade zur Durchführung der Safe Torque Off-Funktion nach Ablauf einer festgelegten ersten Zeitspanne ab Initiierung aufweist, wobei der erster Abschaltpfad ein erstes Abschaltsignal (STO_{HS}) zur Beeinflussung der Steuerspannung überträgt und/oder wobei der zweite Abschaltpfad ein zweites Abschaltsignal (STO_{IMP}) zur Beeinflussung der Zündimpulse überträgt.

Ein erfindungsgemäßes Verfahren zum Ansteuern der Anordnung sieht gemäß Anspruch 9 vor, dass die Sicherheitsanordnung als Erweiterung der Standardsteuerung betrieben wird und ein in die Standardsteuerung einsteckbares Sicherheitsmodul umfasst, wobei mittels dieser Sicherheitsanordnung eine Safe Torque Off-Funktion zur sicheren Drehmomentfreischaltung der Gleichstrommaschine in der Weise durchgeführt wird, wobei bei einer Initiierung der STO-Funktion zunächst der Standardsteuerung eine Drehmomentfreischaltung vorgegeben wird und wobei das Sicherheitsmodul erst nach Ablauf einer festgelegten ersten Zeitspanne ab Initiierung der Safe Torque Off-Funktion über einen ersten Abschaltpfad der Sicherheitsanordnung die Steuerspannung unterbricht und/oder über einen zweiten Abschaltpfad der Sicherheitsanordnung die Zündimpuls-Versorgungsspannung unterbricht.

Die sicherheitsrelevante STO-Funktion wird dabei von der Sicherheitsanordnung gesteuert, wobei die Standardsteuerung nur in einer ersten Phase zur Einleitung einer nichtsicheren Drehmomentfreischaltung genutzt wird. Dies geschieht deshalb, weil eine unmittelbare Unterbrechung der Spannungsversorgung aufgrund der oft benötigten hohen Ströme vermieden werden soll. Ein Abschalten bei hohen Strömen würde zu einem Unerwünschten Verschleiß des Gleichstromrichters führen. Nach Ablauf der festgelegten ersten Zeitspanne wird die Standardsteuerung nicht mehr benötigt und die Sicherheitsanordnung führt eine sichere Drehmomentfreischaltung durch. Dabei ist sowohl für den Kanal zur Unterbrechung der Steuerspannung als auch für den Kanal zur Unterbrechung der Zündimpuls-Versorgungsspannung ein eigenes Zeitglied zur Bestimmung der ersten Zeitspanne vorgesehen. Die beiden Kanäle sind insofern als redundant anzusehen, als eine erfolgreiche Signalverarbeitung in einem der beiden Kanäle ausreicht, um eine STO-Funktion auszuführen (d.h. entweder Unterbrechung der Steuerspannung oder Unterbrechung der Zündimpuls-Versorgungsspannung).

Erfindungsgemäß wird dieses Verfahren mit einer Sicherheitsanordnung nach Anspruch 1 durchgeführt, welche ein Schütz zur Anschaltung der Steuerspannung an das Betätigungselement des Hauptschalters umfasst, wobei das Schütz über einen ersten Halbleiterschalter, an dessen Basisanschluss das erste Abschaltsignal anliegt, angesteuert ist und wobei die Zündimpuls-Versorgungsspannung über einen vierten Halbleiterschalter, an dessen Basisanschluss das zweite Abschaltsignal anliegt, unterbrechbar ist.

Da die Sicherheitsanordnung als Erweiterung der Standardsteuerung betrieben wird, ist das Sicherheitsmodul in einfacher Weise als Zusatzmodul ausführbar. Es umfasst dann eingangsseitig Anschlüsse für Funktionssignale und ausgangsseitig Anschlüsse zur Verbindung mit den bereits in der Standardsteuerung vorhandenen Abschaltpfaden. Werden die genormten Sicherheitsfunktionen nicht benötigt, ist die Standardsteuerung auch mit einem Dummy-Board anstelle eines Sicherheitsmoduls betreibbar.

In vorteilhafter Weise erfolgt die Unterbrechung der Steuerspannung durch eine Signaländerung eines ersten Abschaltsignals und das erste Abschaltsignal wird über einen ersten Verarbeitungskanal des Sicherheitsmoduls aus einem ersten STO-Funktionssignal zur Initiierung der STO-Funktion gebildet. Die Unterbrechung der Zündimpuls-Versorgungsspannung erfolgt durch eine Signaländerung eines zweiten Abschaltsignals und das zweite Abschaltsignal wird über einen zweiten Verarbeitungskanal des Sicherheitsmoduls aus einem zweiten STO-Funktionssignal zur Initiierung der STO-Funktion gebildet. Die Verarbeitung in zwei Verarbeitungskanälen mit diversifiziert implementierter diskreter Hardware führt zu einer sicheren Signalverarbeitung während einer Drehmomentfreischaltung.

Das Sicherheitsmodul ist dabei in der Weise eingerichtet, dass es einen ersten Verarbeitungskanal, umfassend einen ersten Logikbaustein mit zugeordnetem SS1-Zeitgleid und ein STO-Zeitglied, zur Generierung des ersten Abschaltsignals aufweist, und dass es einen zweiten Verarbeitungskanal, umfassend einen zweiten Logikbaustein mit zugeordnetem SS1-Zeitglied und einem STO-Zeitglied, zur Generierung des zweiten Abschaltsignals aufweist.

Jeder Verarbeitungskanal ist dabei vorteilhafterweise mittels diskreter Bauelemente, insbesondere mittels jeweils einem sogenannten Complex Programmable Logic Device (CPLD) aufgebaut. Damit wird trotz komplexer Architektur ein diskreter Schaltungsaufbau erreicht, wobei die Sicherstellung der Sicherheitsintegrität der CPLDs, welche zur Durchführung intensiver Selbsttests ausgelegt sind, eine maßgebliche Erleichterung darstellt.

Eine weitere Ausprägung der Erfindung sieht vor, dass mittels Sicherheitsanordnung eine SS1-Funktion zur sicheren Abschaltung der Gleichstrommaschine in der Weise durchgeführt wird, dass bei Initiierung der SS1-Funktion zunächst der Standardsteuerung eine geführte und mittels Sicherheitsmodul zeitlich überwachte Verzögerung oder Stillsetzung der Gleichstrommaschine vorgegeben wird und dass das Sicherheitsmodul erst nach Ablauf einer parametrierbaren zweiten Zeitspanne ab Initiierung der SS1-Funktion eine STO-Funktion initiiert.

Damit wird die Vorgabe der Norm IEC 61800 erfüllt, ein zusätzliches Zeitfenster vorzusehen, während dem ein geführtes Stillsetzen der Gleichstrommaschine erfolgt und nach dessen Ablauf eine STO-Funktion initiiert wird. Hierfür wird zuerst der Standardsteuerung, welche die Drehzahl regelt, das SS1-Funktionssignal zur Verfügung gestellt, um bestimmte Standardfunktionen durchzuführen. Erst nach dem Ablauf der parametrierbaren zweiten Zeitspanne wird die STO-Funktion ausgeführt.

Vorteilhafterweise geschieht dies, indem über den ersten Verarbeitungskanal aus einem ersten SS1-Funktionssignal zur Initiierung der SS1-Funktion eine verzögerte Signaländerung des ersten Abschaltsignals erfolgt und/oder indem über den zweiten Verarbeitungskanal aus einem zweiten SS1-Funktionssignal zur Initiierung der SS1-Funktion eine verzögerte Signaländerung des zweiten Abschaltsignals erfolgt. Auch hierbei bilden die beiden Verarbeitungskanäle mit unterschiedlichen Implementierungen die Grundlage für eine sichere Signalverarbeitung.

In einer Ausprägung der Sicherheitsanordnung ist ein mit einer Speichereinheit und dem Sicherheitsmodul verbundener Mikroprozessor vorgesehen, wobei die Speichereinheit mit einer Messwerterfassungseinrichtung verbunden ist und wobei der Mikroprozessor eine Diagnoseeinheit zur Auswertung sicherheitsrelevanter Parameter umfasst.

Vorteilhafterweise wird der Mikroprozessor genutzt, um die Zündimpuls-Versorgungsspannung gepulst zu schalten. Zur Durchführung generiert der Mikroprozessor ein Zündimpulssteuersignal, welches am Basisanschluss eines sechsten Halbleiterschalters anliegt, wobei der sechste Halbleiterschalter in Reihe mit der Zündimpuls-Versorgungsspannung angeordnet ist.

Zudem werden in einer vorteilhaften Ausführung mittels Mikroprozessor laufend der Schaltzustand des Hauptschalters überwacht und/oder in Abhängigkeit des Zustandes der Gleichstrommaschine ein Zündimpuls-Einschaltsignal zur Freigabe der Zündimpuls-Versorgungsspannung und ein Schütz-Einschaltsignal zur Schaltfreigabe des Hauptschalters vorgegeben.

Dabei ist der Mikroprozessor mit dem Basisanschluss eines zum ersten Halbleiterschalter in Reihe angeordneten zweiten Halbleiterschalters verbunden und des Weiteren mit dem Basisanschluss eines zum vierten Halbleiterschalter in Reihe angeordneten fünften Halbleiterschalters verbunden.

Schließlich ist es von Vorteil, wenn eine Einrichtung zur Unter- und Überspannungsüberwachung vorgesehen ist, welche eine fehlerfreie positive Versorgungsspannung an den Basisanschluss eines dritten und eines siebenten Halbleiterschalters schaltet und wenn der dritte Halbleiterschalter im ersten Abschaltpfad zur Unterbrechung des ersten Abschaltsignals und der siebende Halbleiterschalter im zweiten Abschaltpfad zur Unterbrechung des zweiten Abschaltsignals angeordnet ist.

Die Erfindung wird nachfolgend in beispielhafter Weise unter Bezugnahme auf die beigefügten Figuren erläutert. Es zeigen in schematischer Darstellung:
- Fig. 1: Sicherheitsanordnung
- Fig. 2: Datenströme innerhalb des Sicherheitsmoduls

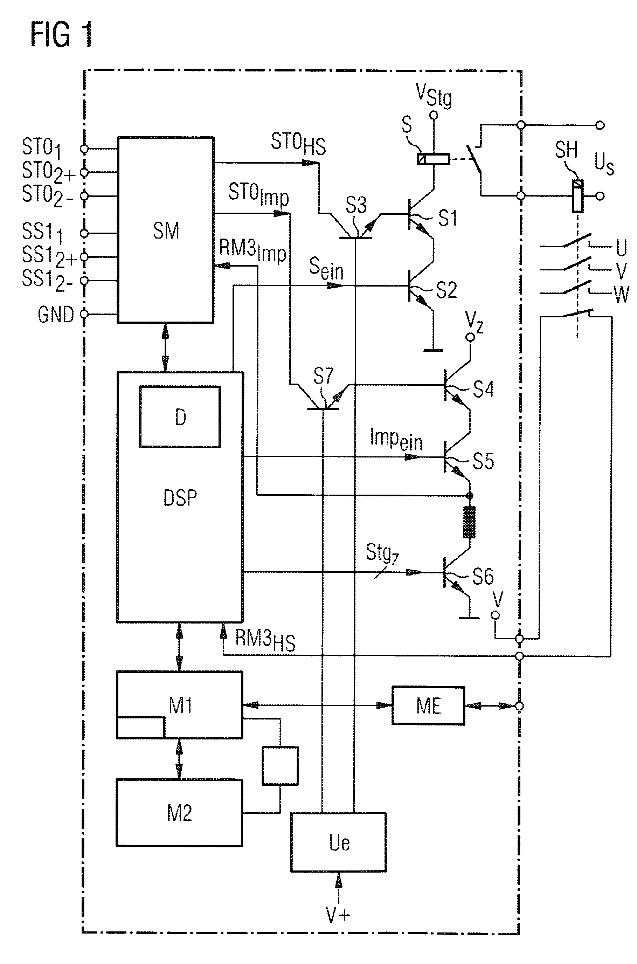

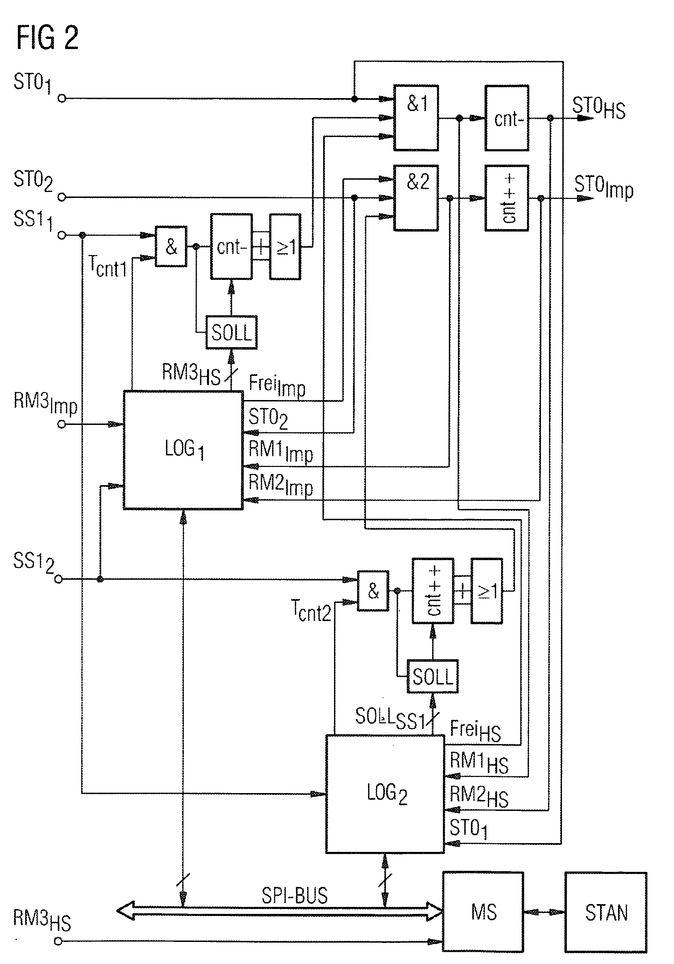

In Figur 1 sind in einer beispielhaften Anordnung der Übersichtlichkeit halber nur die sicherheitsrelevanten Schaltungsteile des Steuerungssystems für Gleichstrommaschinen dargestellt. Die übrigen Teile einer Gleichstrommaschinensteuerung zur Durchführung von Standardfunktionen sind in bekannter Weise ausgeführt; Figur 1 zeigt deshalb nur die Schnittstellen zu diesen Teilen. Das wesentliche Schaltungselement bildet das Sicherheitsmodul SM mit den sicherheitsrelevanten Zeitgliedern, die in Figur 2 dargestellt sind. Dieser Teil bildet die sicherheitsrelevante Hardwareumsetzung der beiden Funktionen STO und SS1. Zur Aktivierung der beide Funktionen sind jeweils drei Eingangsklemmen STO₁, STO₂₊, STO₂-, SS1₁, SS1₂₊, SS1₂₋ vorgesehen. Zudem befindet sich am Sicherheitsmodul SM ein Potenzialanschluss GND. An den Eingängen des Sicherheitsmoduls liegen somit zwei Funktionssignale SS1₁, SS1₂ der SS1-Funktion "sichere Abschaltung" und zwei Funktionssignale STO₁, STO₂ der STO-Funktion "sichere Drehmomentfreischaltung" an.

Ausgangsseitig weist das Sicherheitsmodul SM zwei unabhängige Abschaltpfade zur Drehmomentfreischaltung auf. Der erste Abschaltpfad dient zur Übertragung eines ersten Abschaltsignals STO_{HS} zur Beeinflussung der Steuerspannung U_{S}, über den zweiten Abschaltpfad wird ein zweites Abschaltsignal STO_{Imp} zur Beeinflussung der Zündimpulse übertragen.

Das Sicherheitsmodul SM ist dabei als modulare Erweiterung zu einer bestehenden Hardware aufgebaut. Die Abschaltpfade sind bereits in der Standardhardware zur Ausführung von Standardfunktionen vorhanden. Die Abschaltpfade sind dabei, wie in der Norm gefordert, rückwirkungsfrei in Bezug auf die Standardhardware. Zusätzlich werden Software-Interfaces für die SS1-Funktionssignale und die STO-Funktionssignale zur Standardsoftware zur Verfügung gestellt. Mit diesen Signalen werden bereits vorhandene Standardfunktionen aufgerufen. Die gesamte Sicherheitsfunktionalität ist somit erst durch die Anbindung bzw. das Einstecken des Sicherheitsmoduls SM aktiviert. Wird das Sicherheitsmodul SM nicht benötigt, kann an dessen Stelle ein Dummy-Board verwendet werden. Dieses Dummy-Board liefert für die zwei Abschaltpfade immer eine logische Eins. Damit ist eine Verwendung der nichtsicherheitsrelevanten Steuerung für eine Gleichstrommaschine ohne die genormten Sicherheitsfunktionen möglich.

An zwei Eingangsklemmen der Sicherheitsanordnung liegt die Steuerspannung U_{S} an, wobei diese Eingangsklemmen über einen Schaltkontakt eines Schützes S verbunden sind. Im störungsfreien Betrieb einer angeschlossenen Gleichstrommaschine ist dieser Schaltkontakt geschlossen. In Serie mit dem Schaltkontakt ist außerhalb der eigentlichen Sicherheitsanordnung die Spule eines als Schütz ausgebildeten Hauptschalters HS geschaltet. Bei aktiviertem Hauptschalter HS (angezogener Schütz) sind die drei Leiter einer Drehstromanschlussleitung u, v, w über drei gekoppelte Kontakte des Hauptschalters HS mit einem Gleichstromrichter zur Leistungsversorgung der Gleichstrommaschine verbunden. Die Kontakte sind zudem mit einem vierten Kontakt gekoppelt, welcher bei aktiviertem Hauptschalter HS geöffnet ist. Über diesen vierten Schalter ist, wie unten näher erörtert, eine Versorgungsspannung V der Sicherheitsanordnung mit dem Eingang einer Diagnoseeinheit D verbunden um dieser die Schaltstellung des Hauptschalters HS mittels eines entsprechenden Rückmeldesignals RM3_{HS} zu signalisieren. Alternativ dazu kann das Rückmeldesignal RM3_{HS} über den Schaltzustand des Hauptschalters HS direkt dem Sicherheitsmodul SM zur weiteren Verarbeitung zugeführt sein.

Die Ansteuerung des Schützes S erfolgt über drei Halbleiterschalter S1, S2, S3, in Figur 1 beispielhaft als NPN-Transistoren dargestellt. Dabei ist die eine Seite der Spule des Schützes S ist mit einer Versorgungsspannung V_{Stg} der Steuerung verbunden, die zweite Seite der Spule liegt am Kollektoranschluss des ersten Halbleiterschalters S1 an. Dessen Emitteranschluss ist wiederum mit dem Kollektoranschluss des zweiten Halbleiterschalters S2 verbunden, dessen Emitteranschluss schließlich an einem Bezugspotenzial anliegt.

Der Basisanschluss des ersten Halbleiterschalters S1 ist mit dem Emitteranschluss des dritten Halbleiterschalters S3 verbunden, an dessen Kollektoranschluss das erste Abschaltsignal STO_{HS} anliegt. Der Basisanschluss des dritten Halbleiterschalters S3 ist mit einer Über- und Unterspannungsüberwachung Ue verbunden, welche im störungsfreien Fall diesen Basisanschluss mit eine positiven Versorgungsspannung V+ beaufschlagt.

Der Basisanschluss des zweiten Halbleiterschalters S2 ist schließlich mit einem Schütz-Einschaltsignal Sₑᵢₙ beaufschlagt, welches mittels Mikroprozessor DSP, welcher die Diagnoseeinheit D umfasst, in Abhängigkeit sicherheitsrelevanten Parameter erzeugt wird. Dieser vom Sicherheitsmodul unabhängige Mikroprozessor DSP stellt auch die Anbindung an die Standardsoftware dar.

Das Schütz S ist somit angezogen, wenn das Sicherheitsmodul SM keine Abschaltung durch Unterbrechung des ersten Abschaltsignals STO_{HS} vorgibt, wenn keine Über- oder Unterspannung festgestellt und wenn das Schütz-Einschaltsignal Sₑᵢₙ des Mikroprozessors DSP nicht unterbrochen ist. In diesem Zustand ist der Hauptschalter HS geschlossen und der Gleichstromrichter versorgt.

Eine Rückmeldung über den Schaltzustand des Hauptschalters HS an den Mikroprozessor DSP zur Verarbeitung in der Diagnoseeinheit D erfolgt dabei, wie oben beschrieben, über den vierten Kontakt des Hauptschalters HS.

Der zweite Abschaltpfad betrifft die Zündimpulse zur Ansteuerung des Gleichstromrichters. Dabei ist eine Zündimpuls-Versorgungsspannung V_{Z} mit dem Kollektoranschluss eines vierten Halbleiterschalters S4 verbunden, dessen Emitteranschluss wiederum an den Kollektoranschluss eines fünften Halbleiterschalters S5 angeschlossen ist. Dessen Emitteranschluss ist über einen Widerstand mit dem Kollektoranschluss eines sechsten Halbleiterschalters S6 verbunden. Zusätzlich ist das am Emitteranschluss des fünften Halbleiterschalters S5 anliegende Impulsmesssignal RM3_{Imp} dem Sicherheitsmodul SM zugeführt.

Der Emitteranschluss des sechsten Halbleiterschalters S6 liegt schließlich wieder an einem Bezugspotenzial an. Der Basisanschluss des sechsten Halbleitschalters S6 wird mit einem Zündimpulssteuersignal Stg_{z} beaufschlagt, welches vom Mikroprozessor DSP bereitgestellt wird.

Am Basisanschluss des fünften Halbleiterschalters S5 liegt ein Zündimpuls-Einschaltsignal Impₑᵢₙ an, welches ebenfalls vom Mikroprozessor DSP in Abhängigkeit sicherheitsrelevanter Parameter erzeugt wird.

Der Basisanschluss des vierten Halbleiterschalters S4 ist mit dem Emitteranschluss eines siebenden Halbleiterschalters S7 verbunden, dessen Kollektoranschluss mit dem zweiten Abschaltsignals STO_{Imp} beaufschlagt ist. Der Basisanschluss des siebenden Halbleiterschalters S7 ist dabei wieder mit der Über- und Unterspannungsüberwachung Ue verbunden und wird im fehlerfreien Fall an die positive Versorgungsspannung V+ angeschaltet.

Die Zündimpulsversorgung ist somit eingeschaltet, wenn das Sicherheitsmodul SM keine Unterbrechung des zweiten Abschaltsignals STO_{ImP} vorgibt, wenn keine Unter- oder Überspannung vorliegt und wenn mittels Mikroprozessor DSP ein Zündimpuls-Einschaltsignal Impₑᵢₙ vorgegeben wird.

In Figur 1 sind zudem zwei kommunizierende Speichereinheiten M1, M2 dargestellt, wobei eine Speichereinheit M1 einen Quarz umfasst und wobei die beiden Speichereinheiten M1, M2 über ein Watchdog verbunden sind. Die eine Speichereinheit M1 ist zudem mit einer Messwerterfassungseinrichtung ME verbunden, über welche externe Messwerte (z.B. des Gleichstromstellers oder des Gleichstrommotors) erfasst werden.

Der Mikroprozessor DSP greift auf die Speichereinheiten M1, M2 zu, um die sicherheitsrelevanten Messwerte und Parameter zu verarbeiten und bei Bedarf Abschaltfunktionen einzuleiten. Des Weiteren ist der Mikrokontroller DSP mit dem Sicherheitsmodul SM verbunden, beispielsweise um das Rückmeldesignal RM3_{HS} über den Schaltzustand des Hauptschalters HS an dieses zu übertragen.

Die in Figur 2 dargestellten Datenströme innerhalb des Sicherheitsmoduls zeigen, dass in diesem durchgängig bis zu den Abschaltpfaden zwei Kanäle zur unabhängigen Verarbeitung der sicheren Funktionen STO und SS1 verwirklicht sind.

Kernelemente des Sicherheitsmoduls SM sind die zwei Logikbausteine LOG1, LOG2 zur Verarbeitung der an den Eingangsklemmen STO₁, STO₂₊, STO₂-, SS1₁, SS1₂₊, SS1₂- des Sicherheitsmoduls SM anliegenden Funktionssignale STO₁, STO₂ und der diversen Rückmeldesignale RM1Imp, RM2Imp, RM3Imp, RM1_{HS}, RM2_{HS}, RM3_{HS}.

An jeden Logikbaustein LOG1, LOG2 ist über eine Sollwertvorgabe SOLL ein parametrierbares Zeitglied in diskreter Ausführung angeschlossen, beispielsweise mit einem Zähler cnt- oder cnt++ und einem Vergleichsglied ≥1. Die Vorgabe eines gepulsten Sollwertes SOLL_{SS1} bestimmt dabei gemeinsam mit der gewählten Zählerfunktion cnt- oder cnt++ bei der Durchführung der Abschaltfunktion SS1, um welche Zeitspanne die nachfolgende sichere Drehmomentfreischaltung STO verzögert wird.

Konkret werden dem ersten Logikbaustein LOG₁ das Impulsmesssignal RM3_{Imp}, das zweite Funktionssignal SS1₂ der Abschaltfunktion SS1, das zweite Funktionssignal STO₂ der Drehmomentfreischaltung sowie zwei modifizierte Impulsmesssignale RM1_{Imp}, RM2_{Imp} direkt zugeführt. Die modifizierten Impulsmesssignale RM1_{Imp}, RM2_{Imp} werden dabei jeweils vor und nach dem entsprechenden STO-Zeitglied cnt++, welches die Verzögerung der sicheren Drehmomentfreischaltung bestimmt, abgenommen.

Das Rückmeldesignal RM3_{HS} über den Schaltzustand des Hauptschalters HS wird dem ersten Logikbaustein LOG₁ über den Mikroprozessor DSP, beispielsweise mittels eines SPI-BUS (Serial Peripheral Interface) zugeführt. Alternativ dazu kann das Rückmeldesignal RM3_{HS} über den Schaltzustand des Hauptschalters HS direkt dem Sicherheitsmodul SM zur weiteren Verarbeitung zugeführt sein.

Der erste Logikbaustein LOG₁ bildet daraus den gepulsten Sollwert zur Durchführung der Abschaltfunktion SS1 (in Abhängigkeit der überwachten geführten Stillsetzung einer angeschlossenen Gleichstrommaschine), des Weiteren ein erstes Testsignal T_{cnt1} und ein Impuls-Freischaltsignal Frei_{Imp}. Mittels Und-Glied & wird das erste Testsignal T_{cnt1} mit dem ersten Funktionssignal SS1₁ der Abschaltfunktion SS1 verknüpft; auf diese Weise kann eine Abschaltfunktion SS1 neben der Unterbrechung des entsprechenden SS1-Funktionssignals auch durch Unterbrechung des ersten Testsignals T_{cnt1} angestoßen werden, beispielsweise zur Durchführung eines Selbsttests.

Das Anstoßen der sicheren Abschaltfunktion SS1 bewirkt in weiterer Folge, dass eine vom ersten Logikbaustein LOG₁ überwachte, geführte Stillsetzung der Gleichstrommaschine erfolgt, wobei nach Ablauf einer mittels Zähler cnt- und im Vergleichsglied ≥1der bestimmten Verzögerung die STO-Funktion ausgelöst wird.

Dem zweiten Logikbaustein LOG₂ sind das erste Funktionssignal SS1₁ der SS1-Funktion, das erste Funktionssignal STO₁ der STO-Funktion sowie zwei modifizierte Rückmeldesignale RM1_{HS}, RM2_{HS} über den Schaltzustand des Hauptschalters HS direkt zugeführt. Das Rückmeldesignal RM3_{HS} über den Schaltzustand des Hauptschalters HS wird dem zweiten Logikbaustein LOG2 wieder mittels Mikroprozessor DSP übermittelt. Die modifizierten Rückmeldesignale RM1_{HS}, RM2_{HS} werden wieder vor und nach dem entsprechenden STO-Zeitglied cnt- zur Verzögerung der sicheren Drehmomentfreischaltung abgeleitet.

Der zweite Logikbaustein LOG2 bildet auf Grundlage dieser Signale den gepulsten Sollwert SOLL_{SS1} zur Durchführung der sicheren Abschaltfunktion SS1, ein zweites Testsignal T_{cnt2} und ein Hauptschalter-Freischaltsignal Frei_{HS}.

Das zugeordnete Und-Glied & verknüpft das zweite Testsignal T_{cnt2} mit dem zweiten Funktionssignal SS1₂ der Abschaltfunktion SS1; auch hierbei kann eine Abschaltfunktion SS1 neben der Unterbrechung des entsprechenden SS1-Funktionssignals durch Unterbrechung des zweiten Testsignal T_{cnt2} zur Durchführung eines Selbsttests angestoßen werden.

Das Anstoßen der Abschaltfunktion SS1 durch Unterbrechung des entsprechenden Signals SS1₂ oder T_{cnt2} bewirkt wiederum, dass eine mittels zweitem Logikbaustein LOG₂ überwachte, geführte Stillsetzung der Gleichstrommaschine mit einer nachfolgenden verzögerten Funktionsdurchführung "Drehmomentfreischaltung" erfolgt. Dabei ist das Signal am Ausgang des Vergleichsglieds ≥1 einem weiteren Und-Glied &2 des zweiten Verarbeitungskanals zugeführt.

Dem Und-Glied &2 des zweiten Verarbeitungskanals sind zudem das zweite STO-Funktionssignal STO₂ sowie das mittels erstem Logikbaustein LOG₁ erzeugte Impuls-Freischaltsignal Frei_{Imp} zugeführt.

Bei Unterbrechung eines dieser Signale erfolgt eine mittels eines nachgeschalteten STO-Zeitglieds cnt- eine verzögerte sicherte Drehmomentfreischaltung, indem am Ausgang des Zeitglieds cnt- das erste Abschaltsignal STO_{HS} unterbrochen wird.

Das am Ausgang des dem ersten Logikbaustein LOG₁ zugeordneten Vergleichsglieds ≥1 anliegende Signal ist einem Und-Glied &1 des ersten Verarbeitungskanals zugeführt. Mittels diesen Und-Glieds &1 wird dieses Signal mit dem ersten STO-Funktionssignal STO₁ sowie dem vom zweiten Logikbaustein LOG₂ erzeugten Impuls-Freischaltsignal Frei_{HS} Verknüpft.

Eine Unterbrechung eines dieser Signale führt nach einer Verzögerung mittels eines nachgeschalteten Zeitglieds cnt++ wiederum zu einer sicheren Drehmomentfreischaltung, indem das zweite Abschaltsignal STO_{Imp} unterbrochen wird.

Die Durchführung der SS1-Funktion und der STO-Funktion erfolgt also mittels zweier Verarbeitungskanäle, wobei der erste Verarbeitungskanal zur verzögerten Unterbrechung des ersten Abschaltsignals STO_{HS} (Öffnen des Hauptschalters HS) und der zweite Verarbeitungskanal zur verzögerten Unterbrechung des zweiten Abschaltsignals STO_{Imp} (Unterbricht die Zündimpulsversorgung) führt.

Die SS1-Funktion wird dabei (abgesehen von den Selbsttestmöglichkeiten) durch Unterbrechung der beiden SS1-Funktionssignals SS1₁, SS1₂ ausgelöst. Es erfolgt eine geführte und mittels Sicherheitsmodul SM überwachte Stillsetzung einer angeschlossenen Gleichstrommaschine mit einer anschließenden verzögerten Auslösung der STO-Funktion.

Die STO-Funktion kann aber auch direkt durch eine Unterbrechung der beiden STO-Funktionssignale STO₁, STO₂ ausgelöst werden. Die Unterbrechung dieser STO-Funktionssignale STO₁, STO₂ wird dabei zunächst an die Standardsteuerung STAN einer angeschlossenen Gleichstrommaschine weitergegeben (in der Regel sind die entsprechenden Abschaltpfade in einer Standardsteuerung nach dem Stand der Technik vorhanden). Die Standardsteuerung STAN zur Durchführung von Standardfunktionen leitet daraufhin eine nicht sichere Drehmomentfreischaltung ein. Nach einer vorgegebenen Verzögerung mittels Zeitglieder cnt- oder cnt++ werden auch die Abschaltsignale STO_{HS} und STO_{Imp} unterbrochen und somit eine sichere Drehmomentfreischaltung bewirkt.

Die beiden Verarbeitungskanäle sind mittels diskreter Bauelemente aufgebaut. Vorteilhafterweise geschieht dies durch den Einsatz jeweils eines sogenannten Complex Programmable Logic Device (CPLD). Mit diesen Bauteilen kann trotz der komplexen Architektur ein diskreter Schaltungsaufbau erreicht werden. Diese Vereinfachung ist eine maßgebliche Erleichterung für die Sicherstellung der Sicherheitsintegrität der CPLDs, welche zur Durchführung intensiver Selbsttests ausgelegt sind. Des Weiteren ist mit diesen Bauteilen eine einfache Anbindung an ein Mikroprozessorsystems MS, welches den Mikroprozessor DSP der Diagnoseeinheit D umfasst, über ein Interface, im vorliegenden Fall ein SPI-Bus, möglich. Das erleichtert die Weitergabe der Statusinformation der SS1-Funktion und der STO-Funktion, die Parametrierung der zweiten Zeitspanne (Überwachungszeit der SS1-Funktion) in den CPLDs sowie zusätzlich eine Diagnose über die gesamten Sicherheitsfunktionen.

Um Common Cause Fehler zu verhindern, sind zudem diversitäre Implementierungen der CPLDs realisiert.

Um auch Ausfälle von Bauelementen in der Kette der Sicherheitsfunktionen erkennen zu können, werden unabhängige Diagnosen auf einem externen Mikroprozessorsystem MS durchgeführt. Durch die lokale Trennung der Diagnoseeinheit D vom Sicherheitssystem ist es zulässig, eine Diagnoseapplikation risikominimierter (geringerer SIL) zu implementieren. Alternativ dazu kann die Diagnose der Bauelemente in der Kette der Sicherheitsfunktionen auch mittels der CPLDs durchgeführt werden.

## Patentansprüche

1. Anordnung zum Ansteuern einer Gleichstrommaschine mittels einer Standardsteuerung und einer Sicherheitsanordnung, wobei die Gleichstrommaschine mittels eines mit einer Steuerspannung (U_{S}) betätigten Hauptschalters (HS) an eine Versorgungsspannung anschließbar ist und wobei zur Steuerung der Drehzahl und/oder des Drehmoments der Gleichstrommaschine aus einer Zündimpuls-Versorgungsspannung (V_{Z}) Zündimpulse zur Ansteuerung der in einem Gleichstromrichter angeordneten elektronischen Schalter abgeleitet sind, dadurch gekennzeichet, dass die sicherheitsanordnung ein Sicherheitsmodul (SM) umfasst, welches als modulare Erweiterung in die standardsteuerung einsteckbar ist, dass die Sicherheitsanordnung zur Initiierung einer Safe Torque Off-Funktion eingereichtet ist und der Standardsteuerung bei Initiierung der Safe Torque Off-Funktion eine Drehmomentfreischaltung vorgibt, dass das Sicherheitsmodul (SM) ausgangsseitig zwei unabhängige Abschaltpfade zur Durchführung der Safe Torque Off-Funktion nach Ablauf einer festgelegten ersten Zeitspanne ab Initiierung aufweist, dass der erste Abschaltpfad ein erstes Abschaltsignal (STO_{HS}) zur Beeinflussung der Steuerspannung überträgt und/oder dass der zweite Abschaltpfad ein zweites Abschaltsignal (STO_{IMP}) zur Beeinflussung der Zündimpulse überträgt.

2. Anordnung zur Durchführung eines Verfahrens nach Anspruch 1, **dadurch gekennzeichnet, dass** ein Schütz (S) zur Anschaltung der Steuerspannung (U_{S}) an ein Betätigungselement des Hauptschalters (HS) vorgesehen ist, dass das Schütz (S) über einen ersten Halbleiterschalter (S1), an dessen Basisanschluss das erste Abschaltsignal (STC_{HS}) anliegt, angesteuert ist und dass die Zündimpuls-Versorgungsspannung (V_{z}) über einen vierten Halbleiterschalter (S4), an dessen Basisanschluss das zweite Abschaltsignal anliegt, unterbrechbar ist.

3. Anordnung nach Anspruch 1 oder 2, **dadurch gekennzeichnet, dass** das Sicherheitsmodul (SM) einen ersten Verarbeitungskanal, umfassend einen ersten Logikbaustein (LOG₁) mit zugeordnetem SS1-Zeitgleid und ein STO-Zeitglied, zur Generierung des ersten Abschaltsignals (STO_{HS}) aufweist, und dass das Sicherheitsmodul (SM) einen zweiten Verarbeitungskanal, umfassend einen zweiten Logikbaustein (LOG₂) mit zugeordnetem SS1-Zeitglied und einem STO-Zeitglied, zur Generierung des zweiten Abschaltsignals (STO_{Imp}) aufweist.

4. Anordnung nach Anspruch 3, **dadurch gekennzeichnet, dass** das jeder Verarbeitungskanal mittels diskreter Bauelemente, insbesondere mittels jeweils einem sogenannten Complex Programmable Logic Device aufgebaut ist.

5. Anordnung nach einem der Ansprüche 1 bis 4, **dadurch gekennzeichnet, dass** ein mit einer Speichereinheit (M1, M2) und dem Sicherheitsmodul (SM) verbundener Mikroprozessor (DSP) vorgesehen ist, dass die Speichereinheit (M1, M2) mit einer Messwerterfassungseinrichtung (ME) verbunden ist und dass der Mikroprozessor (DSP) eine Diagnoseeinheit (D) zur Auswertung sicherheitsrelevanter Parameter umfasst.

6. Anordnung nach einem der Ansprüche 1 bis 5 zur Durchführung eines Verfahrens nach Anspruch 5, **dadurch gekennzeichnet, dass** der Mikroprozessor (DSP) ein Zündimpulssteuersignal (Stg_{Z}) generiert, welches am Basisanschluss eines sechsten Halbleiterschalter (S6) anliegt und dass der sechste Halbleiterschalter (S6) in Reihe mit der Zündimpuls-Versorgungsspannung (V_{Z}) angeordnet ist.

7. Anordnung nach einem der Ansprüche 1 bis 6 zur Durchführung eines Verfahrens nach Anspruch 7, **dadurch gekennzeichnet, dass** der Mikroprozessor (DSP) mit dem Basisanschluss eines zum ersten Halbleiterschalter (S1) in Reihe angeordneten zweiten Halbleiterschalters (S2) verbunden ist und dass der Mikroprozessor (DSP) des Weiteren mit dem Basisanschluss eines zum vierten Halbleiterschalter (S4) in Reihe angeordneten fünften Halbleiterschalters (S5) verbunden ist.

8. Anordnung nach einem der Ansprüche 1 bis 7 **dadurch gekennzeichnet, dass** eine Einrichtung zur Unter- und Überspannungsüberwachung (Ue) vorgesehen ist, welche eine fehlerfreie positive Versorgungsspannung (+V) an den Basisanschluss eines dritten und eines siebenten Halbleiterschalters (S3, S7) schaltet und dass der dritte Halbleiterschalter (S3) im ersten Abschaltpfad zur Unterbrechung des ersten Abschaltsignals (STO_{HS}) und der siebende Halbleiterschalter (S7) im zweiten Abschaltpfad zur Unterbrechung des zweiten Abschaltsignals (STO_{Imp}) angeordnet ist.

9. Verfahren zum Ansteuern einer Gleichstrommaschine mittels einer Standardsteuerung und einer Sicherheitsanordnung, wobei die Gleichstrommaschine mittels eines mit einer Steuerspannung (U_{S}) betätigten Hauptschalters (HS) an eine Versorgungsspannung anschließbar ist und wobei zur Steuerung der Drehzahl und/oder des Drehmoments der Gleichstrommaschine aus einer Zündimpuls-Versorgungsspannung (V₂) Zündimpulse zur Ansteuerung der in einem Gleichstromrichter angeordneten elektronischen Schalter abgeleitet sind, **dadurch gekennzeichnet, dass** die Sicherheitsanordnung als Erweiterung der Standardsteuerung betrieben wird und ein in die Standardsteuerung einsteckbares Sicherheitsmodul (SM) umfasst, und dass mittels dieser Sicherheitsanordnung eine Safe Torque Off-Funktion zur sicheren Drehmomentfreischaltung der Gleichstrommaschine in der Weise durchgeführt wird, dass bei einer Initiierung der Safe Torque Off-Funktion zunächst der Standardsteuerung eine Drehmomentfreischaltung vorgegeben wird und dass das Sicherheitsmodul (SM) erst nach Ablauf einer festgelegten ersten Zeitspanne ab Initiierung der Safe Torque Off-Funktion über einen ersten Abschaltpfad der Sicherheitsanordnung die Steuerspannung (U_{S}) unterbricht und/oder über einen zweiten Abschaltpfad der Sicherheitsanordnung die Zündimpuls-Versorgungsspannung (V_{Z}) unterbricht.

10. Verfahren nach Anspruch 9, **dadurch gekennzeichnet**, dann die Unterbrechung der Steuerspannung (U_{S}) durch eine Signaländerung eines ersten Abschaltsignals (STO_{HS}) erfolgt und dass das erste Abschaltsignal (STO_{HS}) über einen ersten Verarbeitungskanal des Sicherheitsmoduls (SM) aus einem ersten STO-Funktionssignal (STO₁) zur Initiierung der Safe Torque Off-Funktion gebildet wird und/oder dass des Weiteren die Unterbrechung der Zündimpuls-Versorgungsspannung (V_{Z}) durch eine Signaländerung eines zweiten Abschaltsignals (STO_{Imp}) erfolgt und dass das zweite Abschaltsignal (STO_{Imp}) über einen zweiten Verarbeitungskanal des Sicherheitsmoduls (SM) aus einem zweiten STO-Funktionssignal (STO₂) zur Initiierung der Safe Torque Off-Funktion gebildet wird.

11. Verfahren nach Anspruch 9 oder 10, **dadurch gekennzeichnet, dass** mittels Sicherheitsanordnung eine SS1-Funktion zur sicheren Abschaltung der Gleichstrommaschine in der Weise durchgeführt wird, dass bei Initiierung der SS1-Funktion zunächst der Standardsteuerung eine geführte und mittels sicherheitsmodul (SM) überwachte Verzögerung der Gleichstrommaschine vorgegeben wird und dass das Sicherheitsmodul (SM) erst nach Ablauf einer parametrierbaren zweiten Zeitspanne ab Initiierung der SS1-Funktion eine Safe Torque Off-Funktion initiiert.

12. Verfahren nach Anspruch 11, **dadurch gekennzeichnet, dass** die Durchführung der SS1-Funktion in der Weise erfolgt, dass über den ersten Verarbeitungskanal aus einem ersten SS1-Funktionssignal (SS1₁) zur Initiierung der SS1-Funktion eine verzögerte Signaländerung des ersten Abschaltsignals (STC_{HS}) erfolgt und/oder dass über den zweiten Verarbeitungskanal aus einem zweiten SS1-Funktionssignal (SS1₂) zur Initiierung der SS1-Funktion eine verzögerte Signaländerung des zweiten Abschaltsignals (STO_{Imp}) erfolgt.

13. Verfahren nach einem der Ansprüche 9 bis 12, **dadurch gekennzeichnet, dass** mittels eines Mikroprozessors (DSP) die Zündimpuls-Versorgungsspannung (V_{Z}) gepulst geschaltet wird.

14. Verfahren nach einem der Ansprüche 9 bis 13, dadurch gekennzeichet, dass mittels Mikroprozessor (DSP) laufend der Schaltzustand des Hauptschalters (HS) überwacht wird.

15. Verfahren nach einem der Ansprüche 9 bis 14, **dadurch gekennzeichnet, dass** mittels Mikroprozessor (DSP) in Abhängigkeit des Zustandes der Gleichstrommaschine ein Zündimpuls-Einschaltsignal (Impₑᵢₙ) zur Freigabe der Zündimpuls-Versorgungsspannung (V_{Z}) und ein Schütz-Einschaltsignal (Sₑᵢₙ) zur Schaltfreigabe des Hauptschalters (HS) vorgegeben werden.

## Claims

1. Arrangement for controlling a DC machine by means of a standard controller and a safety arrangement, wherein the DC machine can be connected to a supply voltage by means of a main switch (HS) actuated by a control voltage (U_{S}) and wherein firing pulses for controlling the electronic switches disposed in a DC converter are derived from a firing pulse supply voltage (V_{Z}) for the purpose of controlling the rotational speed and/or the torque of the DC machine, **characterised in that** the safety arrangement comprises a safety module (SM) which can be inserted as a modular extension into the standard controller, **in that** the safety arrangement is configured for initiating a Safe Torque Off function and upon initiation of the Safe Torque Off function specifies a torque disconnection to the standard controller, **in that** at its output end the safety module (SM) has two independent switch-off paths for performing the Safe Torque Off function after a defined first time period from initiation has elapsed, **in that** the first switch-off path transmits a first switch-off signal (STO_{HS}) for influencing the control voltage and/or **in that** the second switch-off path transmits a second switch-off signal (STO_{IMP}) for influencing the firing pulses.

2. Arrangement for performing a method according to claim 1, **characterised in that** a contactor (S) for connecting the control voltage (U_{S}) to an actuating element of the main switch (HS) is provided, **in that** the contactor (S) is controlled via a first semiconductor switch (S1) at whose base terminal the first switch-off signal (STO_{HS}) is present, and **in that** the firing pulse supply voltage (V_{Z}) can be interrupted via a fourth semiconductor switch (S4) at whose base terminal the second switch-off signal is present.

3. Arrangement according to claim 1 or 2, **characterised in that** the safety module (SM) has a first processing channel, comprising a first logic device (LOG₁) with associated SS1 timing element and an STO timing element, for generating the first switch-off signal (STO_{HS}), and **in that** the safety module (SM) has a second processing channel, comprising a second logic device (LOG₂) with associated SS1 timing element and an STO timing element, for generating the second switch-off signal (STO_{Imp}).

4. Arrangement according to claim 3, **characterised in that** each processing channel is implemented by means of discrete components, in particular by means of a so-called complex programmable logic device in each case.

5. Arrangement according to one of claims 1 to 4, **characterised in that** a microprocessor (DSP) connected to a memory unit (M1, M2) and to the safety module (SM) is provided, **in that** the memory unit (M1, M2) is connected to a measured value acquisition device (ME) and **in that** the microprocessor (DSP) comprises a diagnostic unit (D) for evaluating safety-relevant parameters.

6. Arrangement according to one of claims 1 to 5 for performing a method according to claim 5, **characterised in that** the microprocessor (DSP) generates a firing pulse control signal (Stg_{Z}) which is present at the base terminal of a sixth semiconductor switch (S6) and **in that** the sixth semiconductor switch (S6) is arranged in series with the firing pulse supply voltage (V_{Z}).

7. Arrangement according to one of claims 1 to 6 for performing a method according to claim 7, **characterised in that** the microprocessor (DSP) is connected to the base terminal of a second semiconductor switch (S2) arranged in series relative to the first semiconductor switch (S1) and **in that** in addition the microprocessor (DSP) is connected to the base terminal of a fifth semiconductor switch (S5) arranged in series relative to the fourth semiconductor switch (S4).

8. Arrangement according to one of claims 1 to 7,
**characterised in that** an undervoltage and overvoltage monitoring device (Ue) is provided which switches a fault-free positive supply voltage (+V) to the base terminal of a third and a seventh semiconductor switch (S3, S7) and **in that** the third semiconductor switch (S3) is arranged in the first switch-off path for the purpose of interrupting the first switch-off signal (STO_{HS}) and the seventh semiconductor switch (S7) is arranged in the second switch-off path for the purpose of interrupting the second switch-off signal (STO_{Imp}).

9. Method for controlling a DC machine by means of a standard controller and a safety arrangement, wherein the DC machine can be connected to a supply voltage by means of a main switch (HS) actuated by a control voltage (U_{S}) and wherein firing pulses for controlling the electronic switches disposed in a DC converter are derived from a firing pulse supply voltage (V_{Z}) for the purpose of controlling the rotational speed and/or the torque of the DC machine, **characterised in that** the safety arrangement is operated as an extension of the standard controller and comprises a safety module (SM) which can be inserted into the standard controller, and **in that** a Safe Torque Off function for safely disconnecting the torque of the DC machine is performed by means of said safety arrangement in such a way that upon initiation of the Safe Torque Off function a torque disconnection is specified initially to the standard controller and **in that** the safety module (SM) interrupts the control voltage (U_{S}) via a first switch-off path of the safety arrangement only after a defined time period from initiation of the Safe Torque Off function has elapsed and/or interrupts the firing pulse supply voltage (V_{Z}) via a second switch-off path of the safety arrangement.

10. Method according to claim 9, **characterised in that** the control voltage (U_{S}) is interrupted by means of a signal change in a first switch-off signal (STO_{HS}) and **in that** the first switch-off signal (STO_{HS}) is formed via a first processing
channel of the safety module (SM) from a first STO function signal (STO₁) for initiating the Safe Torque Off function and/or **in that** in addition the firing pulse supply voltage (V_{Z}) is interrupted by means of a signal change in a second switch-off signal (STO_{Imp}) and **in that** the second switch-off signal (STO_{Imp}) is formed via a second processing channel of the safety module (SM) from a second STO function signal (STO₂) for initiating the Safe Torque Off function.

11. Method according to claim 9 or 10, **characterised in that** an SS1 function for safely ramping down the DC machine is performed by means of the safety arrangement in such a way that upon initiation of the SS1 function a guided deceleration, monitored by means of the safety module (SM), of the DC machine is initially specified to the standard controller and **in that** the safety module (SM) initiates a Safe Torque Off function only after a parameterisable second time period from initiation of the SS1 function has elapsed.

12. Method according to claim 11, **characterised in that** the SS1 function is performed in such a way that a delayed signal change in the first switch-off signal (STO_{HS}) is effected via the first processing channel from a first SS1 function signal (SS1₁) for initiating the SS1 function and/or that a delayed signal change in the second switch-off signal (STO_{Imp}) is effected via the second processing channel from a second SS1 function signal (SS1₂) for initiating the SS1 function.

13. Method according to one of claims 9 to 12, **characterised in that** the firing pulse supply voltage (V_{Z}) is switched in a pulsed manner by means of a microprocessor (DSP).

14. Method according to one of claims 9 to 13, **characterised in that** the switching status of the main switch (HS) is continuously monitored by means of microprocessor (DSP).

15. Method according to one of claims 9 to 14, **characterised in that** a firing pulse turn-on signal (Impₑᵢₙ) for enabling the firing pulse supply voltage (V_{Z}) and a contactor turn-on signal (Sₑᵢₙ) for enabling the main switch (HS) are specified by means of microprocessor (DSP) as a function of the status of the DC machine.

## Revendications

1. Dispositif pour commander une machine à courant continu au moyen d'une commande standard et d'un dispositif de sécurité, la machine à courant continu pouvant être reliée à une tension d'alimentation au moyen d'un interrupteur principal (HS) actionné par une tension de commande (U_{S}) et des impulsions d'amorçage servant à commander les interrupteurs électroniques situés dans un convertisseur de courant continu étant dérivées pour commander la vitesse et/ou le couple de la machine à courant continu à partir d'une tension d'alimentation à impulsions d'amorçage (V_{Z}), **caractérisé en ce que** le dispositif de sécurité comprend un module de sécurité (SM) qui peut être enfiché comme extension modulaire dans la commande standard, **en ce que** le dispositif de sécurité est adapté pour déclencher une fonction *Safe Torque Off* et donne à la commande standard une consigne de désactivation du couple au moment du déclenchement de la fonction *Safe Torque Off,* **en ce que** le module de sécurité (SM) est pourvu, sur le côté de sortie, de deux circuits de coupure indépendants pour l'exécution de la fonction *Safe Torque Off* après expiration d'un premier intervalle de temps fixé démarrant au moment du déclenchement, **en ce que** le premier circuit de coupure transmet un premier signal de coupure (STO_{HS}) pour influer sur la tension de commande et/ou **en ce que** le second circuit de coupure transmet un second signal de coupure (STO_{IMP}) pour influer sur les impulsions d'amorçage.

2. Dispositif pour exécuter un procédé selon la revendication 1, **caractérisé en ce qu'**un contacteur (S) pour le raccordement de la tension de commande (U_{S}) à un élément d'actionnement de l'interrupteur principal (HS) est prévu, **en ce que** le contacteur (S) est commandé par le biais d'un premier commutateur à semi-conducteur (S1) à la borne de base duquel est appliqué le premier signal de coupure (STO_{HS}) et **en ce que** la tension d'alimentation à impulsions d'amorçage (V_{Z}) peut être coupée par le biais d'un quatrième commutateur à semi-conducteur (S4) à la borne de base duquel est appliqué le second signal de coupure.

3. Dispositif selon la revendication 1 ou 2, **caractérisé en ce que** le module de sécurité (SM) est pourvu d'un premier canal de traitement, comprenant un premier composant logique (LOG₁) avec un relais de temporisation associé SS1 et un relais de temporisation STO pour la génération du premier signal de coupure (STO_{HS}) et **en ce que** le module de sécurité (SM) est pourvu d'un second canal de traitement, comprenant un second composant logique (LOG₂) avec un relais de temporisation associé SS1 et un relais de temporisation STO pour la génération du second signal de coupure (STO_{IMP}).

4. Dispositif selon la revendication 3, **caractérisé en ce que** chaque canal de traitement est formé de composants discrets, notamment formé à chaque fois par un dispositif logique programmable complexe (CPLD).

5. Dispositif selon l'une des revendications 1 à 4, **caractérisé en ce qu'**un microprocesseur (DSP) relié à une unité de mémoire (M1, M2) et au module de sécurité (SM) est prévu, **en ce que** l'unité de mémoire (M1, M2) est reliée à un dispositif de saisie de valeurs de mesure (ME) et **en ce que** le microprocesseur (DSP) comprend une unité de diagnostic (D) pour analyser des paramètres importants pour la sécurité.

6. Dispositif selon l'une des revendications 1 à 5 pour l'exécution d'un procédé selon la revendication 5, **caractérisé en ce que** le microprocesseur (DSP) génère un signal de commande par impulsions d'amorçage (Stg_{Z}) qui est appliqué à la borne de base d'un sixième commutateur à semi-conducteur (S6) et **en ce que** le sixième commutateur à semi-conducteur (S6) est monté en série avec la tension d'alimentation à impulsions d'amorçage (V_{Z}).

7. Dispositif selon l'une des revendications 1 à 6 pour l'exécution d'un procédé selon la revendication 7, **caractérisé en ce que** le microprocesseur (DSP) est relié à la borne de base d'un deuxième commutateur à semi-conducteur (S2) monté en série avec le premier commutateur à semi-conducteur (S1) et **en ce que** le microprocesseur (DSP) est relié, en outre, à la borne de base d'un cinquième commutateur à semi-conducteur (S5) monté en série avec le quatrième commutateur à semi-conducteur (S4).

8. Dispositif selon l'une des revendications 1 à 7, **caractérisé en ce que** l'on prévoit un dispositif de surveillance des sous-tensions et des surtensions (Uₑ) qui délivre une tension d'alimentation positive (+V) sans erreur à la borne de base d'un troisième et d'un septième commutateur à semi-conducteur (S3, S7) et **en ce que** le troisième commutateur à semi-conducteur (S3) est situé dans le premier circuit de coupure pour interrompre le premier signal de coupure (STO_{HS}) et le septième commutateur à semi-conducteur (S7) est situé dans le second circuit de coupure pour interrompre le second signal de coupure (STO_{IMP}).

9. Procédé pour commander une machine à courant continu au moyen d'une commande standard et d'un dispositif de sécurité, la machine à courant continu pouvant être reliée à une tension d'alimentation au moyen d'un interrupteur principal (HS) actionné par une tension de commande (U_{S}) et des impulsions d'amorçage servant à commander les interrupteurs électroniques situés dans un convertisseur de courant continu étant dérivées pour commander la vitesse et/ou le couple de la machine à courant continu à partir d'une tension d'alimentation à impulsions d'amorçage (V_{Z}), **caractérisé en ce que** le dispositif de sécurité fonctionne comme une extension de la commande standard et comprend un module de sécurité (SM) pouvant être enfiché dans la commande standard, et **en ce que** ce dispositif de sécurité permet d'exécuter une fonction *Safe Torque Off (STO)* pour la désactivation sûre du couple de la machine à courant continu de telle sorte que, lors d'un déclenchement de la fonction *Safe Torque Off,* la commande standard reçoit d'abord une consigne de désactivation du couple et **en ce que** le module de sécurité (SM) ne coupe la tension de commande (U_{S}) par le biais d'un premier circuit de coupure du dispositif de sécurité et/ou ne coupe la tension d'alimentation à impulsions d'amorçage (V_{Z}) par le biais d'un second circuit de coupure du dispositif de sécurité qu'après expiration d'un premier intervalle de temps fixé démarrant au moment du déclenchement de la fonction *Safe Torque Off.*

10. Procédé selon la revendication 9, **caractérisé en ce que** la coupure de la tension de commande (U_{S}) est le fait d'une modification de signal d'un premier signal de coupure (STO_{HS}) et **en ce que** le premier signal de coupure (STO_{HS}) est formé par le biais d'un premier canal de traitement du module de sécurité (SM) à partir d'un premier signal de fonction STO (STO₁) de déclenchement de la fonction *Safe Torque Off* et/ou **en ce que**, en outre, la coupure de la tension d'alimentation à impulsions d'amorçage (V_{Z}) est le fait d'une modification de signal d'un second signal de coupure (STO_{IMP}) et **en ce que** le second signal de coupure (STO_{IMP}) est formé par le biais d'un second canal de traitement du module de sécurité (SM) à partir d'un second signal de fonction STO (STO₂) de déclenchement de la fonction *Safe Torque Off.*

11. Procédé selon la revendication 9 ou 10, **caractérisé en ce que** le dispositif de sécurité permet d'exécuter une fonction SS1 pour la mise hors tension sûre de la machine à courant continu de telle sorte qu'au moment du lancement de la fonction SS1, la commande standard reçoit d'abord une consigne de temporisation guidée, et surveillée par le module de sécurité (SM), de la machine à courant continu et **en ce que** le module de sécurité ne déclenche une fonction *Safe Torque Off* qu'après expiration d'un second intervalle de temps paramétrable commençant au moment du déclenchement de la fonction SS1.

12. Procédé selon la revendication 11, **caractérisé en ce que** l'exécution de la fonction SS1 se déroule de telle sorte qu'une modification temporisée du premier signal de coupure (STO_{HS}) est effectuée, par le biais du premier canal de traitement, à partir d'un premier signal de fonction SS1 (SS1₁) de déclenchement de la fonction SS1 et/ou qu'une modification temporisée du second signal de coupure (STO_{IMP}) est effectuée, par le biais du second canal de traitement, à partir d'un second signal de fonction SS1 (SS1₂) de déclenchement de la fonction SS1.

13. Procédé selon l'une des revendications 9 à 12, **caractérisé en ce que** la tension d'alimentation à impulsions d'amorçage (V_{Z}) est délivrée par impulsions grâce à un microprocesseur (DSP).

14. Procédé selon l'une des revendications 9 à 13, **caractérisé en ce que** le microprocesseur (DSP) permet de surveiller en continu l'état de commutation de l'interrupteur principal (HS).

15. Procédé selon l'une des revendications 9 à 14, **caractérisé en ce que** le microprocesseur (DSP) permet de prévoir, en fonction de l'état de la machine à courant continu, un signal d'enclenchement par impulsions d'amorçage (Impₑᵢₙ) pour le déblocage de la tension d'alimentation par impulsions d'amorçage (V_{Z}) et un signal d'enclenchement de contacteur (Sₑᵢₙ) pour l'autorisation de commutation de l'interrupteur principal (HS).
